# DEMANDE DE BREVET EUROPEEN

(11) **EP 0 559 516 A1**
(43) Date de publication de la demande: **08.09.1993**
(21) Numéro de dépôt: 93400435.9
(22) Date de dépôt: 19.02.1993
(51) Int. Cl.: F16J 15/32, F16L 27/093

(54) **Joint tournant pour circuit hydraulique**

(30) Priorité: 06.03.1992 FR 9202691
(71) Demandeur: HYDRO RENE LEDUC, F-54122 Azerailles (FR)
(72) Inventeur: Porel, Louis-Claude, F-88700 Jeanmenil (FR)
(74) Mandataire: Loyer, Bertrand

(57) **Abrégé**

Un joint tournant pour circuit hydraulique comporte au moins un joint composite du type constitué par l'association d'un anneau de frottement en matière dure et d'un anneau en matière plus souple.

L'anneau 9 en matière dure et conformé en bague de support, en ménageant ainsi un jeu j relativement important entre deux pièces 2, 3 en rotation relative l'une par rapport à l'autre.

## Description

La présente invention concerne un joint tournant pour circuit hydraulique, dans lequel l'étanchéité est assurée par des joints-composites.

Ces joints-composites sont avantageusement utilisés dans des circuits hydrauliques à des pressions supérieures à 400 bars, notamment pour réaliser l'étanchéité entre deux pièces cylindriques en rotation l'une par rapport à l'autre.

Dans le brevet français n° 1.049.256 du 18 janvier 1951, au nom de Monsieur René LEDUC, on a décrit un joint-composite constitué par l'assemblage, l'un sur l'autre, d'un anneau en matière dure, ayant de bonnes qualités de frottement et d'un anneau en matière élastique, ce dernier se déformant sous l'action de la pression hydraulique et appliquant fortement l'anneau en matière dure contre la surface sur laquelle il frotte.

Dans le brevet 2.138.311 du 24 mai 1971, au nom de la société René LEDUC et Fils, on a décrit un perfectionnement destiné à empêcher tout glissement relatif de l'un des anneaux par rapport à l'autre. Ce perfectionnement consiste à ménager dans la face de l'anneau en matière dure, qui se trouve en contact avec l'anneau en matière élastique, une pluralité de petites alvéoles, de façon que, sous l'effet de la pression hydraulique, la matière élastique flue dans les alvéoles, ce qui ancre cette matière élastique dans la matière dure.

Dans le certificat d'addition n° 2.538.871, on a décrit deux perfectionnements : un premier selon lequel l'anneau de frottement en matière dure est pourvu sur ses deux faces de gorges périphériques ; et un deuxième perfectionnement selon lequel l'anneau en matière dure est percé d'orifices le traversant de part en part ; de sorte que l'extrémité de chaque orifice en contact avec la pièce métallique retienne du liquide hydraulique, son autre extrémité servant d'alvéole d'ancrage pour la matière molle et ductile.

Dans le document EP 0 348 267 A1 au nom de la Société Anonyme HYDRO RENE LEDUC, on décrit un joint-composite avec un anneau de frottement en matière dure et un anneau en matière plus souple, dans lequel des alvéoles d'ancrage dans l'anneau en matière dure sont constituées par des rainures non débouchantes parallèles à l'axe de rotation des pièces et dans lequel l'anneau en matière plus souple comporte, venues de moulage, des nervures ayant pratiquement la même largeur et la même hauteur que les rainures mais une longueur inférieure, lesdites nervures s'encastrant dans lesdites rainures pour solidariser en rotation les deux anneaux.

Cependant, la réalisation du joint-composite décrit dans ce document nécessite l'usinage d'une gorge profonde pour loger les deux anneaux et un ajustement de qualité entre les pièces en rotation relative l'une par rapport à l'autre.

La présente invention a pour but de simplifier l'usinage des joints tournants pour circuit hydraulique, de permettre le montage du joint-composite avec un jeu important entre rotor et stator, tout en conservant les caractéristiques d'ancrage des anneaux l'un par rapport à l'autre.

La présente invention a pour objet un joint tournant pour circuit hydraulique, constitué par un ensemble comportant deux pièces en rotation relative l'une par rapport à l'autre et au moins un joint-composite du type constitué par l'association d'un anneau de frottement en matière dure et d'un anneau en matière souple, l'anneau en matière souple emprisonné dans une gorge annulaire d'une première desdites pièces en rotation relative étant apte à exercer sur l'anneau en matière dure un effort radial pour assurer l'étanchéité entre lesdites pièces, caractérisé en ce que l'anneau en matière dure est conformé en bague de support de manière à permettre de monter les pièces en rotation relative avec un jeu relativement important et en ce que l'anneau est rendu solidaire de ladite première pièce par des moyens d'ancrage.

Selon les caractéristiques de l'invention :
- l'anneau en matière dure déborde au moins partiellement d'un côté de la gorge de logement de l'anneau en matière plus souple ledit côté correspondant à une plage de contact de l'anneau en matière dure avec la pièce dont il est solidaire;
- l'anneau en matière dure présente, au moins localement sur ladite plage de contact, des conformations coopérant avec des usinages de forme correspondante dans une gorge de logement de l'anneau en matière dure, pour constituer lesdits moyens d'ancrage;
- les moyens d'ancrage comportent des picots réalisés sur la pièce coopérant avec des creux de forme correspondante sur l'anneau en matière dure, ou réciproquement;
- la pièce solidaire de l'anneau en matière dure comporte une gorge de logement pour l'anneau en matière dure, à l'intérieur de laquelle est usinée la gorge de logement pour l'anneau en matière plus souple.
- les moyens d'ancrage comportent au moins un moyen ponctuel de fixation coopérant avec un logement de la pièce pour rendre solidaire l'anneau en matière dure de la pièce;
- l'anneau en matière dure déborde sensiblement de part et d'autre de la gorge de logement de l'anneau en matière plus souple.

L'invention sera mieux comprise grâce à la description donnée à titre d'exemple non limitatif au regard des dessins annexés dans lesquels :
La figure 1 représente une vue schématique en demi-coupe radiale d'un joint tournant selon l'invention;
La figure 2 représente une vue schématique en coupe à grande échelle d'un joint tournant selon l'invention;
Les figures 3A et 3B représentent des vues schématiques en coupe correspondant à la ligne III-III de la figure 2.
La figure 4 représente une vue analogue à la figure 2 d'un autre joint tournant selon l'invention.

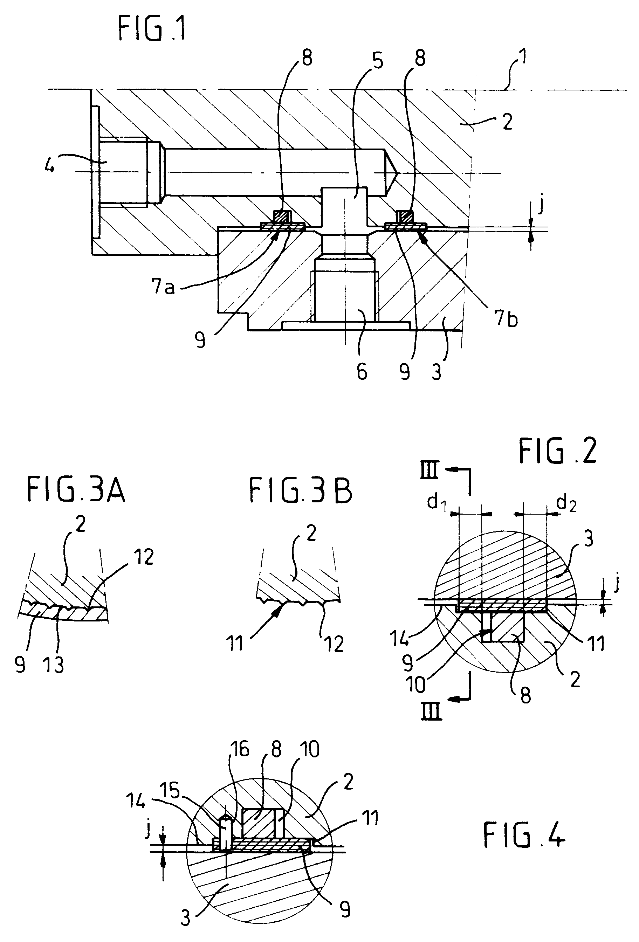

En référence à la figure 1, un ensemble appelé "joint tournant hydraulique" apte à tourner autour d'un axe de révolution 1 comprend un rotor 2 et un stator 3 séparés par un jeu j relativement important.

Le rotor 2 comporte un perçage 4 pour la circulation d'un fluide hydraulique sous pression, dans lequel débouche une gorge annulaire 5.

Le stator 3 comporte un perçage 6 débouchant radialement intérieurement, de manière à ce que le fluide hydraulique sous pression circule librement entre le perçage 4 et le perçage 6 à travers la gorge annulaire 5.

De part et d'autre de la gorge annulaire 5, deux usinages 7a, 7b sont par exemple sensiblement symétriques par rapport au plan diamétral médian de la gorge annulaire 5. L'étanchéité du joint tournant est obtenue au moyen d'associations d'anneaux 8 en matière relativement souple (telle que du caoutchouc) et d'anneaux 9 en matière dure à bonnes qualités de frottement (telle que du nylon ou du téflon) : ces associations appelées "joints-composites" sont placées dans les usinages 7a, 7b.

Les anneaux 8 en matière relativement souple sont dans l'exemple décrit radialement intérieurs aux anneaux 9 en matière dure, pour que la matière relativement souple comprimée par le fluide hydraulique sous haute pression exerce à son tour un effort radial sur la matière dure de l'anneau 9 pour l'appliquer contre la paroi du stator 3 et assurer ainsi l'étanchéité entre le rotor 2 et le stator 3.

En référence à la figure 2, selon l'invention, l'anneau 9 en matière dure déborde sensiblement de part et d'autre d'une gorge annulaire 10 de logement de l'anneau 8 en matière relativement souple, tout en étant rendu solidaire du rotor 2 en rotation par des moyens d'ancrage.

Ainsi, l'anneau 8 en matière relativement souple prisonnier dans la gorge 10 de logement est coiffé par l'anneau 9 en matière dure solidaire du rotor 2 en rotation ; l'anneau 8 ne subit ainsi aucun glissement relatif ni aucun frottement susceptible de l'échauffer lors de la rotation du rotor 2; les caractéristiques d'ancrage de l'anneau 9 par rapport à l'anneau 8 sont ainsi conservées.

On prévoit avantageusement une gorge annulaire 11 de largeur légèrement supérieure à la largeur de l'anneau 9, pour loger l'anneau 9 de manière à éviter tout débattement longitudinal notable lors de la rotation relative du rotor 2 par rapport au stator 3.

La gorge annulaire 11 est usinée de préférence avant l'usinage de la gorge annulaire 10 à l'intérieur de la gorge 11.

Les positions respectives des gorges 10 et 11 sont telles que l'anneau 9 déborde par rapport à la gorge 10, d'un côté d'une distance prédéterminée d1, et du côté opposé d'une autre distance prédéterminée d2. De préférence, les distances d1 et d2 sont sensiblement égales.

Selon l'invention, l'anneau 9 sensiblement plus large que l'anneau 8 remplit la fonction de bague de support solidaire du rotor, de manière à séparer le stator du rotor par un jeu j important en évitant ainsi tout frottement entre le stator et le rotor.

L'introduction d'un jeu important j entre les pièces en rotation relative l'une par rapport à l'autre présente plusieurs avantages:
- la suppression du frottement direct du rotor sur le stator permet de fabriquer le rotor et le stator en acier ordinaire ou un matériau analogue à usinabilité améliorée, ce qui diminue sensiblement le prix de revient du rotor et du stator;
- la suppression du frottement permet également la suppression des traitements de surface habituellement nécessaires, ce qui procure une économie supplémentaire;
- enfin, l'usinage des gorges annulaires 10 et 11 sur la partie 2 radialement intérieure peut se faire de façon économique par tournage.

En référence aux figures 3A et 3B, la gorge 11 du rotor 2 est usinée au moins localement sur la plage correspondante à une distance prédéterminée d1 ou d2 pour présenter des moyens d'ancrage 12 coopérant avec des conformations 13 de forme concordante de l'anneau 9 en matière dure.

Les moyens d'ancrage 12 sont de préférence des picots subsistant en relief après usinage de la gorge 11 et les conformations 13 sont par exemple des creux aptes à recevoir les picots 12 et venus directement de moulage sur la face radialement intérieure de l'anneau 9.

Selon l'invention, tout autre moyen de solidarisation adapté et mécaniquement équivalent, tel que notamment : des alvéoles 12 coopérant avec des protubérances 13 ou bien des nervures 12 coopérant avec des rainures 13, peut également être utilisé.

Il est cependant impératif, comme précisé dans le document EP 0 348 267 A1 au nom de la Société Anonyme HYDRO RENE LEDUC dont le contenu est considéré comme faisant partie intégralement de la présente description, d'empêcher toute fuite ou pénétration de liquide hydraulique entre les anneaux 9 et 10, qui soit susceptible de les désolidariser l'un de l'autre.

Le fluide hydraulique sous haute pression passe entre l'anneau 9 en matière dure et la paroi du rotor 2 et vient mettre sous pression le volume intérieur de la gorge 10.

L'anneau 8 en matière souple est ainsi comprimé à l'intérieur de la gorge 10 et exerce à son tour un effort radial sur l'anneau 9 en matière dure pour assurer l'étanchéité entre les pièces 2 et 3.

En référence à la figure 4, où les repères identiques désignent des éléments identiques ou similaires à ceux des autres figures, l'anneau 9 en matière dure est ancré dans le rotor 2 par au moins un moyen ponctuel de fixation 15 coopérant avec un logement 16 usiné dans le rotor 2 pour rendre solidaire l'anneau 9 en matière dure de la pièce 2.

Les moyens ponctuels de fixation 15 sont par exemple des rivets, des goupilles ou des vis à tête évasée non dépassante coopérant avec des alésages ou taraudages 16 correspondants dans le rotor 2.

Bien entendu, l'invention englobe également toute modification de forme ou variante de réalisation d'usinages 7a, 7b sur une pièce radialement intérieure 2, différant des combinaisons de gorges 10 et 11, mais fonctionnellement équivalents.

Le mouvement de rotation relative permet également sans sortir du cadre de l'invention d'échanger les rôles du rotor 2 et du stator 3 : par conséquent, l'invention couvre également la variante selon laquelle la pièce radialement intérieure 2 immobile est le stator, et la pièce radialement extérieure 3 constitue le rotor.

## Revendications

1. Joint tournant pour circuit hydraulique, constitué par un ensemble comportant deux pièces en rotation relative l'une par rapport à l'autre et au moins un joint-composite du type constitué par l'association d'un anneau de frottement en matière dure et d'un anneau en matière souple, l'anneau en matière souple emprisonné dans une gorge annulaire d'une première desdites pièces en rotation relative étant apte à exercer sur l'anneau en matière dure un effort radial pour assurer l'étanchéité entre lesdites pièces, caractérisé en ce que l'anneau en matière dure (9) est conformé en bague de support de manière à monter les pièces (2, 3) en rotation relative avec un jeu (j) relativement important et en ce que l'anneau (9) est rendu solidaire de ladite première pièce (2) par des moyens d'ancrage (12, 13 ; 15, 16).

2. Joint tournant selon la revendication 1, caractérisé par le fait que l'anneau en matière dure (9) déborde au moins partiellement d'un côté de la gorge de logement (10) de l'anneau en matière plus souple (8) ledit côté correspondant à une plage de contact de l'anneau en matière dure (9) avec la pièce (2) dont il est solidaire.

3. Joint tournant selon la revendication 2, caractérisé par le fait que l'anneau en matière dure (9 présente, au moins localement sur ladite plage de contact, des conformations (13) coopérant avec des usinages (12) de forme correspondante dans une gorge (11) de logement de l'anneau en matière dure (9), pour constituer lesdits moyens d'ancrage (12, 13).

4. Joint tournant selon l'une des revendications 1 à 3, caractérisé par le fait que les moyens d'ancrage (12, 13) comportent des picots (12) réalisés sur la pièce (2) coopérant avec des creux (13) de forme correspondante sur l'anneau en matière dure (9), ou réciproquement.

5. Joint tournant selon l'une des revendications 1 à 4, caractérisé en ce que la pièce (2) solidaire de l'anneau en matière dure (9) comporte une gorge de logement (11) pour l'anneau en matière dure (9), à l'intérieur de laquelle est usinée la gorge (10) de logement pour l'anneau en matière plus souple (8).

6. Joint tournant selon l'une des revendications 1 à 5, caractérisé en ce que les moyens d'ancrage (12, 13; 15, 16) comportent au moins un moyen ponctuel (15) de fixation coopérant avec un logement (16) de la pièce (2) pour rendre solidaire l'anneau en matière dure (9) de la pièce (2).

7. Joint tournant selon l'une des revendications 1 à 6, caractérisé en ce que l'anneau en matière dure (9) déborde sensiblement de part et d'autre de la gorge (10) de logement de l'anneau en matière plus souple (8).
